(19) Europäisches Patentamt
European Patent Office
Office européen des brevets

(11) **EP 1 377 825 B1**

(12) **FASCICULE DE BREVET EUROPEEN**

(45) Date de publication et mention
de la délivrance du brevet:
**20.02.2008 Bulletin 2008/08**

(51) Int Cl.:
**G01N 33/18** (2006.01)     **G01N 21/27** (2006.01)
**G01N 21/33** (2006.01)

(21) Numéro de dépôt: **02706916.0**

(22) Date de dépôt: **01.03.2002**

(86) Numéro de dépôt international:
**PCT/FR2002/000753**

(87) Numéro de publication internationale:
**WO 2002/071058 (12.09.2002 Gazette 2002/37)**

(54) **PROCEDE DE DOSAGE DE LA DIETHANOLAMINE EN SOLUTION AQUEUSE**

VERFAHREN ZUR DOSIERUNG VON DIETHANOLAMIN IN EINER WÄSSRIGEN LÖSUNG

METHOD FOR DOSING DIETHANOLAMINE IN AQUEOUS SOLUTION

(84) Etats contractants désignés:
**AT BE CH CY DE DK ES FI FR GB GR IE IT LI LU MC NL PT SE TR**

(30) Priorité: **01.03.2001 FR 0102819**

(43) Date de publication de la demande:
**07.01.2004 Bulletin 2004/02**

(73) Titulaire: **TotalFinaElf France**
**92800 Puteaux (FR)**

(72) Inventeurs:
• **BUISSON, Jean-François**
**F-13500 Martiques (FR)**
• **MACON, Philippe**
**F-76133 Maneglise (FR)**
• **POULY, Frédéric**
**F-69008 Lyon (FR)**

(74) Mandataire: **Roger, Walter et al**
**Cabinet Jolly**
**54, rue de Clichy**
**75009 Paris (FR)**

(56) Documents cités:
**WO-A-97/35191**          **US-A- 5 630 987**
**US-A- 5 654 198**

• **PIETSCH J. ET AL: 'LIQUID CHROMATOGRAPHIC DETERMINATION OF POLAR ORGANIC NITROGEN COMPOUNDS AND THEIR BEHAVIOUR DURING DRINKING WATER TREATMENT' VOM WASSER vol. 88, 1997, WEINHEIM, pages 119 - 135, XP008070286**

EP 1 377 825 B1

**Description**

La présente invention concerne un nouveau procédé pour le dosage rapide de la diéthanolamine en solution aqueuse. L'invention concerne plus particulièrement un procédé pour la mesure de la quantité de diéthanolamine présente dans une eau, utilisable dans le domaine de l'analyse, mais aussi dans un processus en continu du traitement des eaux industrielles.

On sait que la diéthanolamine (en abrégé, D.E.A.) a de multiples applications dans l'industrie, notamment pour la désulfuration des gaz ou pour la neutralisation des molécules soufrées contenues dans les essences, dans des procédés de désulfuration utilisés, par exemple, dans les raffineries de pétrole.

On sait aussi que la D.E.A. a une forte contribution à la formation du COT (carbone organique total) dans les eaux de rejet industrielles et que cette molécule se comporte comme un poison pour les lits bactériens des biofiltres utilisés pour le traitement de ces mêmes eaux, avant leur rejet dans le milieu naturel.

Il apparaît donc indispensable de suivre l'évolution de ces teneurs en D.E.A. et de pouvoir en mesurer les quantités de façon la plus précise possible, pour optimiser, par exemple, le fonctionnement des procédés de désulfuration, ou pour contrôler la qualité des eaux de rejet industrielles de façon à être en conformité avec les normes très strictes en matière d'environnement.

Une méthode de dosage utilisée dans la technique nécessite l'emploi d'une technique séparative de type chromatographie en phase liquide à haute pression, après transformation chimique de la D.E.A.

Cette technique d'analyse, qui implique l'utilisation d'un appareillage coûteux, n'est pas disponible dans tous les laboratoires de contrôle, du fait de sa complexité et, de plus, elle requiert un niveau d'expertise pour son utilisation. Elle est également malheureusement longue, pour obtenir un résultat, puisque sa durée d'analyse est d'environ une heure, limitant d'autant son utilisation en ligne.

Le document le plus proche de l'état de la technique « Liquid chromatographic determination of polar organic nitrogen compounds and their behaviour during drinking water treatment » vom Wasser, vol. 88, 1997, pages 119 à 135, de Pietsch et al., décrit une méthode d'analyse des amines aliphatiques en présence d'eau.

La présente invention vise à remédier à ces inconvénients en proposant une technique de mesure par spectrométrie ultraviolette, qui soit plus simple, plus rapide et plus facile à mettre en oeuvre que la méthode de laboratoire ci-dessus évoquée et, de plus, susceptible de s'adapter à une utilisation en ligne.

La D.E.A. contenue dans une solution aqueuse n'est cependant pas directement observable en l'état dans l'ultraviolet, puisque son spectre d'absorption, très peu sensible, se situe dans l'ultraviolet lointain (inférieur à 200 nm), qui est également une zone d'absorption d'une pluralité de composés chimiques tels que, par exemple, l'oxygène et le gaz carbonique dissous, ainsi que les acides carboxyliques et différents hydrocarbures que l'on rencontre habituellement dans les eaux industrielles.

C'est pourquoi, selon l'invention, on commence par former un nouveau composé à partir d'un réactif spécifique aux amines secondaires, dans lequel la D.E.A., dont on veut mesurer la teneur, s'est substituée à un atome de ce réactif. Ce nouveau composé, qui est alors décelable par spectrométrie, UV, est ensuite mesuré de façon connue par l'homme du métier dans une bande de longueurs d'onde comprise entre 200 nm et 350 nm. C'est à partir des teneurs calculées en ce nouveau composé que l'on peut enfin déduire directement la teneur en D.E.A. contenue dans l'échantillon.

L'invention a par conséquent pour objet un procédé tel que décrit en revendication 1.

Le nouveau composé formé par substitution d'un atome du réactif avec la D.E.A. contenue dans l'échantillon peut être choisi, par exemple, dans le groupe constitué des amide, des uréthanes et des amines tertiaires.

Dans une mise en oeuvre préférée de l'invention, ce dérivé est avantageusement l'uréthane de D.E.A. ou « Fmoc-D.E.A. » obtenu par réaction de la D.E.A. avec le chloroformiate de 9-méthylfluorényle, dont le spectre d'absorbance, mesuré par spectrométrie ultraviolette, présente deux pics, respectivement à une longueur d'onde de 293 nm et de 301 nm.

Une forme de mise en oeuvre de l'invention consiste à observer la vitesse de cette réaction, en mesurant la quantité de dérivé formée pendant un intervalle de temps prédéterminé, pour en déduire ensuite la quantité initiale de D.E.A. présente dans l'échantillon.

La Demanderesse a établi, en effet, que si l'on enregistre le spectre d'absorbance ultraviolet du milieu réactionnel aux instants to et to + t, la différence A d'absorbance pour l'un des pics caractéristiques du spectre enregistré, par exemple pour l'un et/ou l'autre des pics à 293 nm et 301 nm pour le Fmoc-D.E.A., est en relation linéaire avec la concentration C initiale en D.E.A. de l'échantillon.

Autrement dit, C=aA+b où a et b sont des constantes, de sorte qu'en mesurant l'absorbance aux instants to et to + t pour au moins un pic d'absorbance tel qu'indiqué ci-dessus du spectre UV, il est possible de déduire directement et de façon simple, de la différence A, la teneur initiale en D.E.A. de l'échantillon.

Cette forme de mise en oeuvre du procédé objet de l'invention est par conséquent réalisée de la manière suivante :

- on introduit dans l'échantillon contenant la D.E.A. le composé destiné à réagir avec celle-ci pour produire le dérivé directement observable par spectrométrie ultraviolette ;
- on procède ensuite à l'enregistrement des spectres d'absorbance ultraviolets de l'échantillon contenant le dérivé de la D.E.A. à des instants to et to+ t,

- on mesure l'absorbance aux instants to et to + t pour l'un au moins des pics caractéristiques des spectres enregistrés ;
- on détermine la différence A d'absorbance entre les instants to +t et to ;
- et l'on déduit par le calcul la concentration initiale C en D.E.A. de l'échantillon à partir de cette différence A, en appliquant la relation C=aA+b, où a et b sont des constantes prédéterminées.

L'ensemble de ces opérations peut être réalisé en un temps très court, de l'ordre de 7 à 8 minutes, sans avoir recours à un appareillage complexe et coûteux, ni à un personnel expert en analyse, et ceci représente un avantage considérable du procédé conforme à l'invention par rapport aux méthodes aujourd'hui en vigueur.

De préférence, le milieu réactionnel est maintenu à un pH contrôlé compris entre 8 et 9 et, de manière encore plus préférée, égal sensiblement à 8,5. Le procédé conforme à l'invention présente l'avantage d'être insensible à la présence de diverses impuretés dans l'échantillon analysé, notamment les phénols ou les sulfures, que l'on retrouve habituellement dans les eaux de rejet industrielles en provenance d'une raffinerie de pétrole. De plus, ces impuretés n'ont pas d'incidence sur la cinétique de la réaction de substitution et ne modifient pas l'absorbance des pics du spectre UV auxquels s'intéresse le présent procédé.

En revanche, la présence éventuelle de composés parasites, par exemple d'amines secondaires ou primaires contenues dans l'échantillon, peut perturber les mesures effectuées et provoquer, par exemple, l'apparition d'un pic parasite sur les spectres mesurés.

Pour remédier à cet inconvénient, il est alors nécessaire de procéder à une déconvolution du ou des spectres obtenus par spectrométrie ultraviolette, c'està-dire réaliser leur décomposition en des spectres élémentaires de référence. Ces spectres de référence correspondent dans la plupart des cas à des spectres obtenus sur des composés « purs », dont les concentrations sont connues, La déconvolution du spectre de l'échantillon va permettre de connaître la contribution de chacun des spectres de référence et donc d'atteindre mathématiquement la composition quantitative de l'échantillon. Les spectres d'échantillons dits d'étalonnage et par conséquent de compositions connues, peuvent être contenus dans une mémoire d'ordinateur, et l'opération de déconvolution spectrale peut ainsi être conduite à l'aide de logiciels connus dans la technique, permettant ainsi d'obtenir directement les résultats d'analyse, sans intervention de l'opérateur.

Les Exemples ci-après visent à illustrer la mise en oeuvre de l'invention. Ils n'ont naturellement aucun caractère limitatif.

Les résultats obtenus dans ces Exemples sont illustrés par les dessins annexés, sur lesquels :

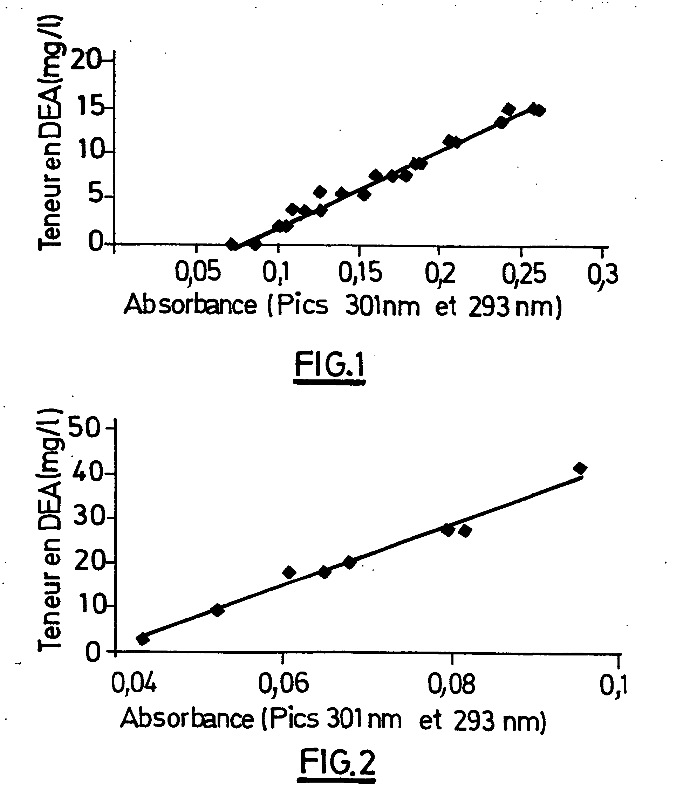

- la figure 1 est un diagramme montrant la corrélation linéaire entre la teneur en D.E.A. des échantillons utilisés dans l'Exemple 1 et la somme des absorbances respectivement mesurées à 293 nm et 301 nm sur des spectres obtenus par spectrométrie ultraviolette, d'un dérivé de la D.E.A. et plus exactement du FmocD.E.A., résultant d'une, addition à ces échantillons, conformément à l'invention, de chloroformiate de 9-méthylfluorényle ;
- la figure 2 est un diagramme analogue à celui de la figure 1 pour des échantillons d'eaux de rejet, provenant d'un traitement de purification en sortie d'unité de clarification de ces eaux et utilisés dans l'Exemple 2, auxquels ont été ajoutées des quantités connues de D.E.A. ;

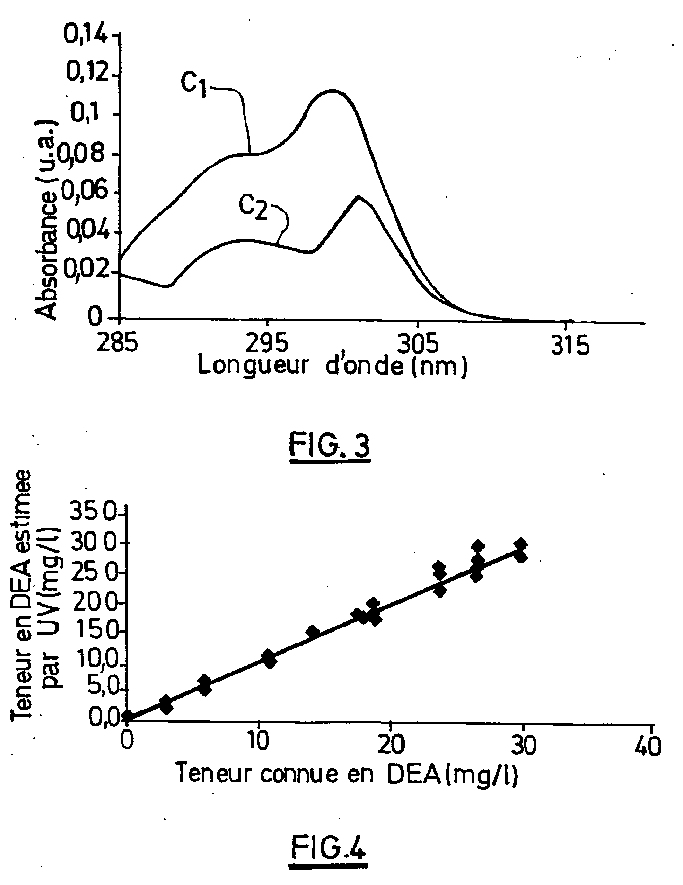

- la figure 3 est un diagramme illustrant deux spectres de référence utilisés en spectrométrie ultraviolette, respectivement repérés « C1 » et « C2 », et constituant une base de déconvolution adaptée pour l'utilisation du réactif conformément à l'invention ;
- la figure 4 est un diagramme montrant la corrélation obtenue entre des teneurs en D.E.A. connues et ces mêmes teneurs obtenues par le procédé de dosage conformément à l'invention, les échantillons ayant servi au tracé de la courbe de corrélation étant des eaux industrielles utilisées dans l'Exemple 3, prélevées dans un procédé de traitement des eaux d'une raffinerie, exempts à la source de D.E.A. et dans lesquels ont été ajoutées des quantités connues de D.E.A.

Exemple 1

Cet Exemple est destiné à illustrer la mise en oeuvre du procédé conforme à l'invention sur des échantillons d'eau déminéralisée additionnés de quantités connues de D.E.A.

Ces échantillons sont tamponnés pour obtenir un pH sensiblement égal à 8,5 avec une solution constituée essentiellement de di-sodium tétraborate et d'acide chlorhydrique.

Le pH des échantillons est vérifié avant mise en oeuvre du procédé selon l'invention et doit être maintenu entre 8 et 9 par ajouts de soude ou d'acide sulfurique.

On y ajoute une solution de chloroformiate de 9-méthylfluorényle, en une quantité suffisante pour obtenir une concentration en ce réactif égale à 150 mg/l. Cette concentration est suffisamment faible pour ne pas saturer les spectres ultraviolets, qui seront mesurés dans la zone de longueurs d'onde de 285 nm à 320 nm, mais suffisamment élevée pour permettre la réaction de ce composé avec la D.E.A., en vue d'obtenir un dérivé décelable par ses pics d'absorption à 293 nm et 301 nm.

On enregistre dans cette bande de longueurs d'onde le spectre du mélange réactionnel contenu dans une cuve, par exemple en quartz, ayant une longueur de trajet optique égale à 10 millimètres, conformément aux recommandations de la technique d'analyse par spectrométrie ultraviolette. Cet enregistrement intervient deux fois, d'abord une minute après avoir procédé au mélange avec le chloroformiate de 9-méthylfluorényle, puis ensuite cinq minutes après le premier enregistrement. On soustrait de manière connue en soi, le spectre obtenu après une minute de réaction de celui obtenu après six minutes de réaction, pour obtenir un nouveau spectre représentatif de la quantité de FmocD.E.A. formée en cinq minutes de réaction. Sur la figure 1, on a reporté en ordonnées les quantités connues en D.E.A. (en mg/l) des échantillons, et en abscisses, la somme des absorbances mesurées à 293 nm et 301 nm.

On constate qu'il existe un rapport sensiblement proportionnel entre la teneur initiale en D.E.A. des échantillons et l'évolution, dans l'intervalle du temps séparant les deux spectres (5 minutes), de la somme des absorbances mesurées, traduisant la formation du dérivé de la D.E.A

La corrélation entre la teneur initiale Y en D.E.A. et la somme des absorbances mesurées X, peut être traduite par l'équation suivante :

$$Y = 88,093 \ x - 6,7987,$$

avec un coefficient de détermination R2 sensiblement égal à 0,98.

On remarquera que, pour effectuer cette corrélation, les absorbances correspondant aux deux pics du spectre, et non une seule, ont été préférentiellement prises en considération et sommées, ceci afin de fiabiliser le résultat obtenu. En effet, la teneur en D.E.A. pourrait être corrélée avec la seule absorbance mesurée à 301 nm, mais les résultats obtenus seraient alors plus diffusés autour de la droite de corrélation et la précision de celle-ci serait moindre. Cette dispersion des relevés expérimentaux est principalement due au fait que les mesures sont réalisées dans des domaines d'absorbance proches des limites de sensibilité de l'appareil utilisé, ici le spectromètre ultraviolet ANTHELIE Senior, commercialisé par la société SECOMAM. L'information complémentaire obtenue en utilisant aussi l'absorbance à 293 nm permet de minimiser l'erreur due à l'appareil lui-même.

Il faut cependant noter que, pour une quantité nulle de D.E.A., on observe néanmoins une absorbance à 293 et 301 nm. Ces absorbances proviennent du Fmoc-OH formé par hydrolyse lors de la réaction de la D.E.A. avec le chloroformiate de 9-méthylfluorényle. Le pH de l'échantillon étant toutefois maintenu constant, l'hydrolyse produit à chaque réaction la même quantité de Fmoc-OH et la contribution de ce produit sur le spectre ultraviolet, d'ailleurs faible, est par conséquent constante. Pour obtenir la quantité de D.E.A., il suffit donc de soustraire la contribution du Fmoc-OH aux absorbances considérées.

En vue d'étudier si la présence de phénols et de sulfures dans les échantillons a une incidence sur la cinétique de la réaction entre la D.E.A.et le chloroformiate de 9-méthylfluorényle, on a ajouté alternativement 10 mg/l de phénols et 10 mg/l de sulfures (HS-) aux échantillons traités, toujours avec un pH contrôlé de 8,5. Dans aucun des cas, l'absorbance des spectres mesurés n'a été modifiée.

Exemple 2

Cet Exemple concerne des analyses effectuées sur des échantillons d'eaux de rejet industrielles, exemptes de D.E.A., provenant d'un traitement de clarification de ces eaux, et dans lesquelles ont été additionnées des quantités connues de D.E.A.

On a procédé d'une manière identique aux essais de l'Exemple 1, en incorporant la D.E.A. dans les échantillons prélevés et en effectuant les mêmes mesures d'absorbance par spectrométrie ultraviolette.

Les résultats obtenus sont rassemblés sur la figure 2, où les teneurs en D.E.A., exprimées en mg/l, apparaissent en ordonnées et la somme des absorbances pour les pics à 293 nm et 301 nm, apparaît en abscisses.

On constate que, comme dans l'Exemple 1, les points reportés sur cette figure se répartissent sensiblement suivant une droite de corrélation, dont l'équation est la suivante :

$$Y = 705,91 \ x - 27,418,$$

avec un coefficient de détermination sensiblement égal à 0,99.

Ces résultats montrent qu'il est possible, par le procédé conforme à l'invention, de doser sans problème la D.E.A. dans des échantillons d'eaux de rejet, en sortie de clarification.

Pour des teneurs réelles en D.E.A. variant de 0,0 à 15,6 mg/l, l'écart-type entre les valeurs mesurées et les valeurs réelles varie de 0,2 à 0,5.

Exemple 3

Cet exemple concerne le dosage de la D.E.A. dans des eaux de rejet en cours de purification, prélevées à l'entrée du traitement des eaux ne contenant pas de D.E.A., auxquelles ont été ajoutées des quantités connues de D.E.A. Les échantillons sont traités d'une manière identique à ceux de l'Exemple 1, c'est-à-dire par réaction avec du chloroformiate de 9-méthylfluorényle et enregistrement des spectres obtenus par spectrométrie ultraviolette du mélange réactionnel, une minute et six minutes après avoir réalisé ce mélange, Les spectres mesurés présentent un pic grossier a 299 nm, traduisant ainsi une réaction parasite, probablement due à la présence, dans les eaux du milieu réactionnel, d'amines secondaires ou primaires.

Il s'est donc avéré nécessaire de décomposer par déconvolution les spectres UV obtenus entre 285 et 320 nm, pour mieux séparer la contribution du dérivé intéressé de la D.E.A. c'est à dire le Fmoc-D.E.A., de celles des autres produits de la réaction, à savoir le produit d'hydrolyse de la réaction, le Fmoc-OH, et le ou les produits parasites tels qu'évoqués ci-dessus.

Dans le cas présent, le produit d'hydrolyse et le ou les produits parasites ont été regroupés en un seul et même spectre de référence (courbe C1 de la figure 3, montrant également la courbe C2 représentative du spectre du dérivé de la D.E.A.).

Le coefficient de contribution de ce dérivé après déconvolution peut alors être corrélé à la teneur initiale en D.E.A. des échantillons, additionnés de quantités connues de D.E.A.

Les résultats obtenus ont été reportés sur la figure 4, où la teneur y en D.E.A. estimée en mg/l à l'aide du procédé conforme à l'invention est indiquée en ordonnées et la teneur réelle x, également en mg/l, apparaît en abscisses.

On constate qu'ici encore, il existe une relation linéaire entre x et y, la droite de corrélation répondant à l'équation :

$$y = 0{,}9929\ x + 0{,}0781,$$

avec un coefficient de détermination sensiblement égal à 0,99.

Les essais rapportés dans les Exemples ci-dessus montrent donc la grande fiabilité du procédé conforme à l'invention et sa facilité de mise en oeuvre. De plus, la mise en application de moyens connus de la technique ne pose aucune difficulté pour une utilisation en ligne du procédé conforme à l'invention.

**Revendications**

1. Procédé pour la mesure de la quantité de diéthanolamine présente dans une solution aqueuse, tel que l'on forme, à partir d'un composé apte à réagir par substitution avec la diéthanolamine, un nouveau composé dérivé dont la teneur est ensuite mesurée par spectrométrie ultraviolette, à partir du spectre d'absorbance de celui-ci mesuré dans une gamme de longueurs d'onde comprise entre 200 nm et 350 nm, et en ce que l'on convertit la teneur de ce nouveau composé en la teneur d'origine en diéthanolamine, ledit procédé étant tel que:

   - on introduit dans l'échantillon contenant la diéthanolamine le composé destiné à réagir avec celle-ci pour produire le dérivé directement observable par spectrométrie UV ;
   - on procède ensuite à l'enregistrement des spectres UV de l'échantillon contenant le dérivé de la diéthanolamine à des instants to et to+ t,
   - on mesure l'absorbance aux instants to et to + t pour l'un au moins des pics caractéristiques des spectres enregistrés ;
   - on détermine la différence A d'absorbance entre les instants to +t et to ; et
   - l'on déduit par le calcul la concentration initiale C de l'échantillon en diéthanolamine à partir de cette différence A, en appliquant la relation C=aA+b, où a et b sont des constantes prédéterminées.

2. Procédé selon la revendication 1, **caractérisé en ce que** le nouveau composé dérivé est formé par substitution d'un atome du réactif avec la diéthanolamine contenue en solution.

3. Procédé selon la revendication 2, **caractérisé en ce que** le réactif est choisi dans le groupe constitué des amides, des uréthanes ou des amines tertiaires.

4. Procédé selon la revendication 2, **caractérisé en ce que** le nouveau composé dérivé formé par substitution d'un atome du réactif avec la diéthanolamine contenue dans l'échantillon est l'uréthane de diéthanolamine ou Fmoc-D. E. A.

5. Procédé selon la revendication 4, **caractérisé en ce que** le composé apte à réagir avec la diéthanolamine pour former l'uréthane de diéthanolamine est le chloroformiate de 9-méthylfluorényle.

6. Procédé selon la revendication 4 ou 5, **caractérisé en ce que** l'on mesure l'absorbance du Fmoc-D. E. A. sur les deux pics caractéristiques aux longueurs d'onde de 293 nm et 301 nm.

7. Procédé selon la revendication 6, **caractérisé en ce que** l'on somme les absorbances mesurées à 293 nm et 301 nm.

8. Procédé selon l'une des revendications 4 à 7, **caractérisé en ce que** l'on mesure l'absorbance aux longueurs d'ondes 293 nm et 301 après réaction complète du réactif et de la diéthanolamine.

9. Procédé selon l'une des revendications précédentes, **caractérisé en ce que** le milieu réactionnel est maintenu à un pH contrôlé compris entre 8 et 9.

10. Procédé selon la revendication 9, **caractérisé en ce que** le milieu réactionnel est maintenu à un pH contrôlé sensiblement égal à 8,5.

11. Procédé selon l'une des revendications précédentes appliqué à un échantillon contenant des composés parasites tels que des amines secondaires ou primaires, susceptibles d'affecter le ou les spectres obtenus par spectrométrie ultraviolette, **caractérisé en ce que** l'on procède à une déconvolution de ces spectres, c'est-à-dire à leur décomposition en des spectres élémentaires d'un certain nombre de composés purs présents et à la comparaison des spectres obtenus avec ceux d'échantillons de composition connue contenant les mêmes composés.

**12.** Procédé selon l'une des revendications précédentes, appliqué à un processus de traitement en continu des eaux d'une raffinerie de pétrole.

**13.** Procédé selon l'une des revendications 1 à 10, appliqué au traitement des eaux issues de l'adoucissement des coupes pétrolières dans une raffinerie de pétrole.

**Claims**

1. A method for measuring the quantity of diethanolamine present in an aqueous solution, such that, starting from compound capable of reacting by substitution with diethanolamine, a new derived compound is formed, the content of which is then measured by ultraviolet spectrometry, on the basis of the absorbance spectrum of the latter measured in a wavelength range from between 200 nm and 350 nm, and in that the content of this new compound is converted into the original diethanolamine content, said method being such that:

   - the compound intended to react with the diethanolamine is introduced into the sample containing the latter in order to produce the derivative directly observable by UV spectrometry;
   - UV spectra of the sample containing the diethanolamine derivative are then recorded at times to and to + t,
   - absorbance at times to and to + t is measured for at least one of the characteristic peaks of the recorded spectra;
   - the difference A in absorbance between times to + t and to is determined; and
   - the initial diethanolamine concentration C of the sample is calculated on the basis of this difference A by applying the equation C = aA + b, where a and b are predetermined constants.

2. A method according to claim 1, **characterised in that** the new derived compound is formed by substitution of an atom of the reagent with the diethanolamine present in solution.

3. A method according to claim 2, **characterised in**

**that** the reagent is selected from the group made up of amides, urethanes or tertiary amines.

4. A method according to claim 2, **characterised in that** the new derived compound formed by substitution of an atom of the reactant with the diethanolamine present in the sample is diethanolamine urethane or Fmoc-DEA.

5. A method according to claim 4, **characterised in that** the compound capable of reacting with diethanolamine to form diethanolamine urethane is 9-methylfluorenyl chloroformate.

6. A method according to claim 4 or claim 5, **characterised in that** the absorbance of Fmoc-DEA is measured on the two characteristic peaks at the wavelengths 293 nm and 301 nm.

7. A method according to claim 6, **characterised in that** the absorbances measured at 293 nm and 301 nm are summed.

8. A method according to any one of claims 4 to 7, **characterised in that** absorbance is measured at the wavelengths 293 nm and 301 once the reagent and the diethanolamine have reacted to completion.

9. A method according to any one of the preceding claims, **characterised in that** the reaction medium is maintained at a controlled pH of between 8 and 9.

10. A method according to claim 9, **characterised in that** the reaction medium is maintained at a controlled pH substantially equal to 8.5.

11. A method according to any one of the preceding claims applied to a sample containing interfering compounds such as secondary or primary amines likely to affect the spectra obtained by ultraviolet spectrometry, **characterised in that** said spectra are deconvolved, i.e. they are broken down into the elemental spectra of a certain number of pure compounds which are present and the resultant spectra are compared with those of samples of known composition containing the same compounds.

12. A method according to any one of the preceding claims, applied to a method for the continuous treatment of the water from a petroleum refinery.

13. A method according to any one of claims 1 to 10, applied to treatment of the water arising from sweetening petroleum cuts in a petroleum refinery.

**Patentansprüche**

1. Verfahren zur Messung der Menge an in einer wässrigen Lösung vorliegendem Diethanolamin, derart, dass ausgehend von einer Verbindung, die zur Reaktion mit dem Diethanolamin durch Substitution in der Lage ist, eine neue, derivatisierte Verbindung gebildet wird, dessen Gehalt dann durch Ultraviolett-Spektrometrie, ausgehend von in einem Wellenlängenbereich von 200 nm bis 350 nm gemessenem Absorptionsspektrum davon, gemessen wird, und dass der Gehalt dieser neuen Verbindung in den Ursprungsgehalt an Diethanolamin umgerechnet wird, wobei das Verfahren so ist, dass:

   - man in die das Diethanolamin enthaltende Probe die Verbindung einführt, die zum Reagieren mit dieser bestimmt ist, um das Derivat zu erzeugen, das mittels UV-Spektrometrie direkt beobachtbar ist;
   - man dann die Aufzeichnung von UV-Spektren der das Derivat des Diethanolamins enthaltenden Probe vornimmt, bei den Zeitpunkten t0 und t0+t,
   - man die Absorption zu den Zeitpunkten t0 und t0+t bei mindestens einem charakteristischen Peak der aufgezeichneten Spektren misst;
   - man die Differenz A der Absorption zwischen den Zeitpunkten t0+t und t0 bestimmt; und
   - man durch Berechnung aus dieser Differenz A die Anfangskonzentration C der Probe an Diethanolamin herleitet, indem die Beziehung C=aA+b angewandt wird, worin a und b vorgegebene Konstanten sind.

2. Verfahren gemäß Anspruch 1, **dadurch gekennzeichnet, dass** die neue derivatisierte Verbindung durch Substitution eines Atoms des Reagens mit dem in der Lösung enthaltenen Diethanolamin gebildet wird.

3. Verfahren gemäß Anspruch 2, **dadurch gekennzeichnet, dass** das Reagens ausgewählt wird aus der Gruppe, die aus Amiden, Urethanen oder tertiären Aminen besteht.

4. Verfahren gemäß Anspruch 2, **dadurch gekennzeichnet, dass** die neue derivatisierte Verbindung, die durch Substitution eines Atoms des Reagens mit dem in der Probe enthaltenen Diethanolamin gebildet wurde, Diethanolamin-Urethan oder Fmoc-D.E.A. ist.

5. Verfahren gemäß Anspruch 4, **dadurch gekennzeichnet, dass** die Verbindung, die zur Reaktion mit Diethanolamin zum Bilden von Diethanolamin-Urethan befähigt ist, 9-Methylfluorenylchlorformiat ist.

6. Verfahren gemäß Anspruch 4 oder 5, **dadurch gekennzeichnet, dass** man die Absorption von Fmoc-D.E.A. bei zwei charakteristischen Peaks der Wellenlängen 293 nm und 301 nm misst.

7. Verfahren gemäß Anspruch 6, **dadurch gekennzeichnet, dass** man die Summe der bei 293 nm und 301 nm gemessenen Absorptionen bildet.

8. Verfahren gemäß einem der Ansprüche 4 bis 7, **dadurch gekennzeichnet, dass** man die Absorption bei den Wellenlängen 293 nm und 301 nach der vollständigen Reaktion des Reagens und des Diethanolamins misst.

9. Verfahren gemäß einem der vorangehenden Ansprüche, **dadurch gekennzeichnet, dass** das Reaktionsmedium bei einem pH gehalten wird, das zwischen einschließlich 8 und 9 eingestellt ist.

10. Verfahren gemäß Anspruch 9, **dadurch gekennzeichnet, dass** das Reaktionsmedium bei einem pH gehalten wird, das im Wesentlichen bei 8,5 eingestellt ist.

11. Verfahren gemäß einem der vorangehenden Ansprüche, angewandt auf eine Probe, die störende Verbindungen wie sekundäre oder primäre Amine enthält, die zur Beeinflussung des oder der aus der Ultraviolett-Spektrometrie erhaltenen Spektren neigen, **dadurch gekennzeichnet, dass** man eine Auflösung dieser Spektren, d.h. ihre Zerlegung in grundlegende Spektren einer bestimmten Anzahl von vorliegenden reinen Verbindungen, und den Vergleich der erhaltenen Spektren mit jenen von Proben einer bekannten Zusammensetzung, die dieselben Verbindungen enthält, vornimmt.

12. Verfahren gemäß einem der vorangehenden Ansprüche, angewandt auf einen fortlaufenden Behandlungsprozess von Wässern einer Erdölraffinerie.

13. Verfahren gemäß einem der Ansprüche 1 bis 10, angewandt auf die Behandlung von Wässern, die aus einer Enthärtung von Erdölfraktionen bei einer Erdölraffinerie stammen.

FIG.1

FIG.2

FIG. 3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WASSER ; PIETSCH.** *Liquid chromatographic determination of polar organic nitrogen compounds and their behaviour during drinking water treatment,* 1997, vol. 88, 119-135